(19) **Europäisches Patentamt**
**European Patent Office**
**Office européen des brevets**

(11) **EP 3 198 137 B1**

(12) **FASCICULE DE BREVET EUROPEEN**

(45) Date de publication et mention
de la délivrance du brevet:
**08.01.2020 Bulletin 2020/02**

(51) Int Cl.:
***F02P 5/152*** *(2006.01)*      ***F02P 5/15*** *(2006.01)*
***F02D 41/24*** *(2006.01)*

(21) Numéro de dépôt: **15771172.2**

(22) Date de dépôt: **27.08.2015**

(86) Numéro de dépôt international:
**PCT/FR2015/052281**

(87) Numéro de publication internationale:
**WO 2016/046462 (31.03.2016 Gazette 2016/13)**

(54) **PROCEDE DE REGLAGE DE L'AVANCE A L'ALLUMAGE PAR DECLENCHEMENT D'UN CALCUL D'UNE CORRECTION ADAPTATIVE**

VERFAHREN ZUR EINSTELLUNG DER ZÜNDVORVERSTELLUNG DURCH AUSLÖSUNG EINER BERECHNUNG EINER ADAPTIVEN KORREKTUR

METHOD FOR ADJUSTING THE IGNITION ADVANCE BY TRIGGERING A CALCULATION OF AN ADAPTIVE CORRECTION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.09.2014 FR 1459035**

(43) Date de publication de la demande:
**02.08.2017 Bulletin 2017/31**

(73) Titulaire: **PSA Automobiles SA**
**78300 Poissy (FR)**

(72) Inventeurs:
• **PARODI, Julien**
**06600 Antibes (FR)**
• **BRENOT, Sebastien**
**25310 Herimoncourt (FR)**
• **DAMBRICOURT, Frederic**
**78600 Maisons Laffitte (FR)**

(56) Documents cités:
**FR-A1- 2 937 383**      **FR-A1- 2 987 404**
**US-A1- 2001 015 197**

**Description**

L'invention a trait au réglage des moteurs à explosion à allumage commandé et plus précisément à la correction curative et adaptative de l'avance à l'allumage de ces moteurs.

Un moteur à explosion à allumage commandé est alimenté, lors de chaque cycle (à deux ou à quatre temps), par un mélange comprenant de l'air et du carburant (mélange air/carburant).

Nous étudierons, ci-après, un moteur à quatre temps, ce moteur comprenant au moins un cylindre et un piston mobile dans le cylindre.

Chaque cycle comprend quatre temps, ci-après nommés phases, à savoir, une phase d'admission, une phase de compression, une phase de combustion-détente et une phase d'échappement, la phase étant initiée par l'allumage du mélange air/carburant comprimé, via une bougie d'allumage contrôlée par un calculateur moteur (ou contrôle moteur).

Afin d'optimiser les performances du moteur, tant en terme de puissance qu'en terme de consommation, l'allumage est déclenché en amont d'une position extrême dite « point mort haut » (PMH) du piston dans le cylindre, à l'issue de la phase de compression.

Afin de pouvoir régler l'allumage, les motoristes utilisent un paramètre appelé « avance à l'allumage » correspondant à un décalage entre l'instant d'allumage et l'instant du passage du piston en position PMH, la position PMH étant la position de référence.

L'avance à l'allumage est matérialisée par un écart angulaire (ou angle de rotation) ayant pour référentiel un vilebrequin mu, via des bielles, par le mouvement des pistons du moteur.

Les moteurs à allumage commandé sont soumis au cliquetis, phénomène d'auto-inflammation connu des motoristes, engendrant la combustion spontanée à contretemps d'une partie du mélange air/carburant indépendamment de l'étincelle de la bougie d'allumage.

Le cliquetis peut provoquer des nuisances sonores au sein de l'habitacle, une dégradation accélérée des éléments moteur (notamment des pistons) ou encore une augmentation de la consommation de carburant.

L'apparition du cliquetis est attribuable à différents facteurs, comme par exemple l'utilisation d'un carburant dégradé.

Lors de l'assemblage du véhicule, les moteurs à allumage commandé sont programmés pour fonctionner avec un carburant ayant un indice d'octane ou un RON, (acronyme de l'anglais Research Octane Number) prédéfini en fonction de la zone géographique dans laquelle le véhicule est utilisé, ce réglage permettant d'éviter les cliquetis.

L'indice d'octane mesure la résistance d'un carburant utilisé dans un moteur à allumage commandé à l'auto-allumage, c'est à dire allumage sans intervention de la bougie. Par exemple, un carburant un RON de 95 est un carburant dont 95% de sa composition est résistante à l'auto allumage.

Le RON varie selon les pays. C'est pourquoi il est nécessaire d'adapter le fonctionnement du moteur à la qualité du carburant pour prévenir le cliquetis. Il est ainsi entendu qu'un carburant dégradé est un carburant ayant un indice d'octane plus faible, autrement dit, un carburant moins raffiné.

Différentes corrections complémentaires entre elles, lors de la détection du cliquetis par capteur (par exemple capteur piézoélectrique), sont mises en place au niveau du calculateur moteur, ces corrections visant à modifier l'avance à l'allumage pour permettre de réduire et, dans le meilleur des cas, d'annuler le cliquetis.

Parmi ces corrections, on trouve d'une part une correction curative visant à réduire rapidement le phénomène de cliquetis lors de son apparition. Cette correction curative consiste à appliquer un retrait de l'avance à l'allumage à chaque détection du cliquetis, puis à tendre vers une valeur initiale de l'avance à l'allumage lorsqu'il n'y a plus de cliquetis sur une durée suffisamment importante (environ égale à 10s).

On trouve d'autre part une correction adaptative qui utilise tout ou partie de la correction curative afin d'effectuer une série d'opérations (et notamment une moyenne des corrections curatives) permettant d'obtenir un retrait de « l'avance à l'allumage » appliqué lors de cliquetis prolongés, généralement dus à l'emploi d'un carburant dégradé.

On connait du document FR 2 987 404 un procédé de réglage de la correction d'avance à l'allumage d'un moteur dans lequel un calcul de correction adaptative est réalisé. Ce calcul prend en compte une moyenne des valeurs des corrections curatives en se basant sur une période de correction curative.

Ce procédé présente un inconvénient majeur. En effet, le calcul d'une moyenne sur une période déterminée, sans prendre en compte les variations du régime moteur, est faussé.

Sur une période donnée, le moteur peut être sollicité à différents régimes. Le nombre de corrections curatives est plus faible lorsque le moteur fonctionne à bas régime et plus élevé lorsque le moteur fonctionne à régime élevé.

Par exemple, pour une même période de temps, lorsque moteur fonctionne à 1000 tr/min (tours par minutes) on relève trois cycles donc trois corrections curatives, alors que lorsque le moteur fonctionne à 6000 tr/min, on relève vingt cycles, donc vingt corrections curatives.

Le calcul de la moyenne sur ces deux périodes peut alors engendrer, à tort, un appel d'une correction adaptative alors que cela n'est pas nécessaire.

Un premier objectif est de proposer un procédé de réglage de l'avance à l'allumage d'un moteur à combustion interne, qui permette un calcul fiable de la moyenne des corrections curatives.

Un deuxième objectif est de proposer un procédé de réglage de l'avance à l'allumage d'un moteur à combustion interne, qui soit facilement paramétrable.

Un troisième objectif est de proposer un procédé de réglage de l'avance à l'allumage d'un moteur à combustion interne, qui soit adaptable à différents régimes moteur, notamment lors de phases transitoires du moteur.

Un quatrième objectif est de proposer un véhicule automobile comprenant un moteur dont l'avance à l'allumage est pilotée par un calculateur utilisant un procédé répondant aux trois premiers objectifs.

A cet effet, il est proposé un procédé de réglage de l'avance à l'allumage, piloté par un calculateur, d'un moteur à combustion interne comprenant au moins un cylindre, ce procédé comprenant les opérations consistant, pour le calculateur, à :

- enregistrer un nombre de cycles effectués dans le cylindre ainsi que la valeur d'une correction curative de l'avance à l'allumage pour chaque cycle, et
- calculer une correction adaptative d'avance à l'allumage durant laquelle le calculateur procède à une moyenne de la valeur de correction curative en fonction du nombre de cycles écoulés, puis calcule une valeur de correction adaptative à partir de cette moyenne,

le déclenchement de la tâche de calcul de la correction adaptative étant réalisé lorsqu'un nombre prédéfini de cycles a été atteint.

Ce procédé permet d'obtenir une moyenne précise de la valeur des corrections curatives, indépendamment des variations du régime moteur.

Selon l'invention, le nombre de cycles déclenchant la tâche de calcul de la correction adaptative est variable et défini par le calculateur en fonction du régime de fonctionnement du moteur ;

Il peut aussi être prévu que le procédé comprenne une tâche de comparaison, avec une valeur théorique, d'un résultat obtenu à la tâche de calcul de la correction adaptative afin de déterminer si une correction adaptative doit être prise en compte.

Il est proposé, en second lieu, un calculateur comprenant les moyens d'acquisition, de traitement par instructions logicielles stockées dans une mémoire ainsi que les moyens de commande requis à mise en œuvre du procédé de réglage de l'avance à l'allumage tel que présenté précédemment.

Il est proposé, en troisième lieu, un moteur comprenant au moins une bougie d'allumage et un calculateur tel que décrit précédemment.

Il est proposé, en quatrième lieu, un véhicule automobile comprenant un moteur tel que décrit précédemment.

D'autres objets et avantages de l'invention apparaîtront à la lumière de la description d'un mode de réalisation, faite ci-après en référence aux dessins annexés dans lesquels :

- la figure 1 est une vue en perspective de dessus d'un véhicule automobile comprenant un moteur à combustion interne à allumage piloté ;
- la figure 2 est une vue schématique du moteur et de ses auxiliaires de pilotage ;
- la figure 3 est un graphique montrant un procédé de réglage de l'avance à l'allumage pour le pilotage de l'allumage du moteur.

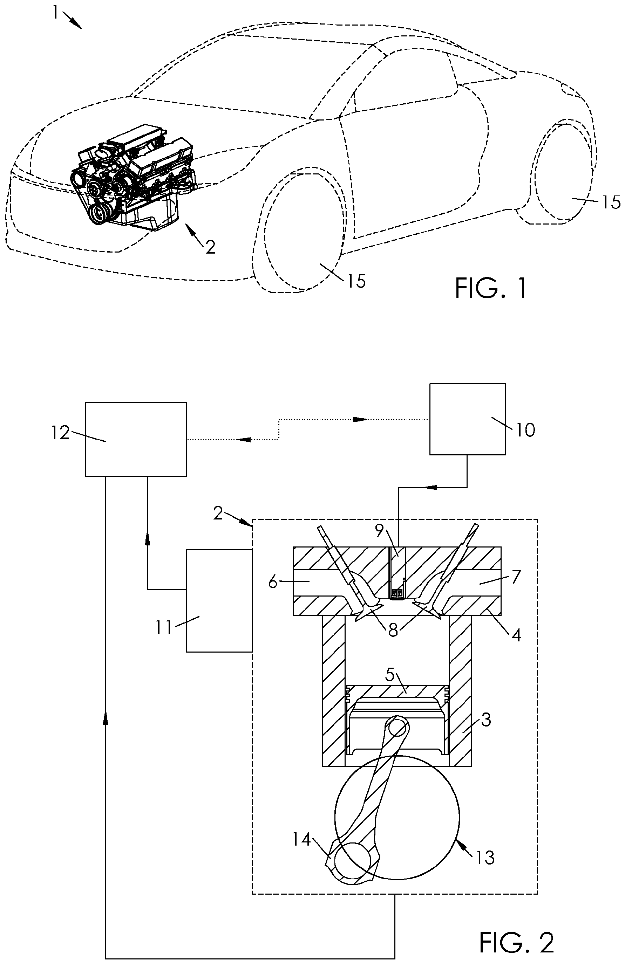

Sur la figure 1 est représenté un véhicule **1** automobile équipé d'un moteur **2** à combustion interne à allumage piloté, en l'espèce un moteur **2** utilisant comme carburant de l'essence.

Le moteur **2** comprend un bloc moteur ayant au moins un cylindre **3**, une culasse **4** recouvrant le bloc moteur et fermant le cylindre **3** à une extrémité supérieure de celui-ci, et un piston **5** monté mobile dans le cylindre **3** entre une position haute, dans laquelle le piston **5** est à proximité de la culasse **4**, et une position basse écartée de la position haute.

La culasse **4** comprend deux conduits **6**, **7** débouchant dans le cylindre **3**, à savoir un conduit **6** d'admission d'un mélange air/carburant et un conduit **7** d'échappement de ce mélange après combustion, les conduits **6**, **7** comprenant, à leur jonction avec le cylindre **3**, une soupape **8** permettant la mise en communication d'un conduit **6**, **7** avec le cylindre **3** ou au contraire la séparation entre le conduit **6**, **7** et le cylindre **3**.

En outre, la culasse **4** comprend, entre les deux soupapes **8**, une bougie **9** d'allumage pour déclencher la combustion du mélange air/carburant dans le cylindre **3**.

Avantageusement, le moteur **2** comprend trois cylindres **3** ; cependant, à des fins de clarté, le moteur **2** illustré sur la figure 2 est représenté de manière schématique ; seuls le bloc moteur, et plus précisément un des cylindres **3** et la culasse **4** sont représentés en section.

Comme on le voit sur la figure 2, le moteur **2** comprend un calculateur **10**, un capteur **11** de cliquetis, un compteur **12** et un vilebrequin **13** entraîné en rotation, via des bielles **14** par les pistons **5**. Le mouvement du vilebrequin **13** est ensuite transmis aux roues **15** du véhicule **1** par l'intermédiaire de différents mécanismes. Le calculateur **10** comprend les moyens d'acquisition, de traitement par instructions logicielles stockées dans une mémoire ainsi que les moyens de commande requis à mise en œuvre du procédé de l'invention décrit plus loin.

Lors d'un cycle moteur, l'allumage du mélange air/carburant, via la bougie **9**, se produit en amont de la position PMH du piston **5** à l'issue de la phase de compression. Afin de calibrer l'allumage, les motoristes définissent un paramètre appelé « avance à l'allumage » correspondant à un écart angulaire (exprimé par exemple en degré), ayant pour référentiel le vilebrequin **13**, entre l'instant de l'allumage et l'instant du passage du piston **5** en position point mort haut (PMH), la position point mort haut (PMH) du piston **5** correspondant à la position de référence.

Le calculateur **10** permet, comme nous le verrons ci-après, de commander l'allumage de la bougie **9** pour déclencher la combustion, et le compteur **12** permet de prendre en compte des informations à transmettre au calculateur **10** en temps voulu.

Le capteur **11** de cliquetis permet la détection de cliquetis à l'intérieur des différents cylindres **3** du moteur **2**. Avantageusement, le moteur **2** ne comprend qu'un seul capteur **11** de cliquetis capable, de déterminer, à l'aide d'informations telles que le régime moteur et la position des pistons **5**, de quel cylindre **3** un cliquetis détecté provient.

Le cliquetis est un phénomène vibratoire dû à une inflammation détonante du mélange air/carburant dans un cylindre **3**. Une répétition continue de ce phénomène peut, à terme, échauffer le moteur **2** et entraîner une destruction des pistons **5** ou, au pire, une fissuration du bloc moteur.

Afin de prévenir et d'empêcher l'apparition du cliquetis, les motoristes chargés du réglage des moteurs règlent l'avance à l'allumage, c'est-à-dire le moment précis auquel chaque bougie **9** génère une étincelle pour enflammer le mélange air/carburant dans chaque cylindre **3**.

Une fois le moteur **2** réglé, le cliquetis n'est que temporaire, notamment lorsque le moteur **2** est mis en marche, et est corrigé de manière curative par le calculateur qui, pendant une période prédéterminée, réduit l'avance l'allumage de la bougie **9** d'une valeur forfaitaire. Une fois la période prédéterminée achevée, le cliquetis n'apparaît plus, et la correction curative est alors arrêtée et l'allumage est réalisé selon les réglages des motoristes.

Toutefois, un moteur **2** est réglé pour un carburant précis ayant un RON (Research Octane Number en anglais ou indice d'octane) déterminé. Lors de l'utilisation des véhicules **1**, il est possible que l'utilisateur ne soit pas en mesure de pouvoir alimenter le moteur **2** avec le carburant pour lequel il a été réglé. C'est notamment le cas dans les pays où l'accès à un carburant de qualité est limité voire inexistant, l'utilisateur étant alors contraint d'utiliser un carburant dégradé.

Par « dégradé » on entend un carburant ayant un RON faible, c'est-à-dire un indice d'octane plus faible, autrement dit, un carburant moins raffiné.

L'utilisation d'un tel carburant dans un moteur **2** réglé pour un carburant ayant un RON élevé, provoque alors une inflammation spontanée du mélange air/carburant dans les cylindres **3**, avant que la bougie **9** ne génère une étincelle, ce qui se traduit par l'apparition d'un cliquetis.

Afin de limiter le cliquetis et de préserver le moteur **2**, le calculateur procède à la réduction de l'avance à l'allumage pour que l'instant ou le mélange air/carburant s'auto enflamme soit égal au moment où l'étincelle de la bougie **9** est générée.

Lorsque le cliquetis est détecté, le capteur **11** de cliquetis envoie une information à un ordinateur de bord (non représenté sur les figures) du véhicule **1** qui génère une correction curative de l'avance à l'allumage, puis déclenche un procédé de réglage de l'avance à l'allumage afin de créer une correction adaptative de l'avance à l'allumage, à la suite de la période de correction curative.

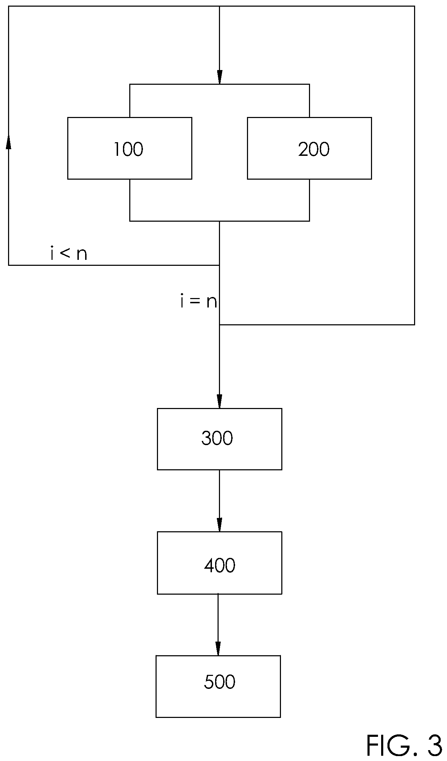

La figure 3 présente un graphique de commande de ce procédé.

Au déclenchement de ce procédé, le compteur **12** réalise deux tâches **100** et **200** simultanément, à savoir un comptage par incrémentation d'un nombre **i** (ayant une valeur prédéfinie égale à 1) et un enregistrement du nombre de cycles effectués, et un relevé et un enregistrement des valeurs de la correction curative à chaque cycle.

Les tâches **100** et **200** sont répétées jusqu'à ce qu'un nombre **n** de nombres de cycles soit atteint. Avantageusement, le nombre **n** est un nombre entier supérieur à 1.

Lorsque le nombre **n** de cycles est atteint, une tâche **300** de calcul de la moyenne des corrections curative est effectuée par le calculateur **10**.

La moyenne est calculée à partir de la formule suivante :

$$\text{Moyenne} = \frac{somme\ des\ valeurs\ curatives}{nombre\ de\ cycles\ effectués}$$

Une fois cette moyenne effectuée, le calculateur **10** effectue une tâche **400** de calcul d'une correction adaptative.

Le résultat de ce calcul est ensuite comparé, lors d'une tâche **500** de comparaison réalisée par le calculateur **10**, avec une valeur de référence de sorte à déterminer si une correction adaptative doit être apportée à l'avance à l'allumage.

Avantageusement, la valeur **n** du nombre de cycles est calibrée par les motoristes lors du réglage du moteur **2**.

Toutefois, afin d'adapter la correction adaptative aux différentes charges du moteur **2** ainsi qu'aux différents régimes, notamment lors des phases transitoires, telles que le démarrage du moteur **2** ou encore les changements de vitesse, le nombre **n** peut évoluer sur une plage de valeurs prédéfinie.

Ainsi, le temps de calcul peut être plus rapide à la fois pour un régime moteur élevé et pour un faible régime moteur.

Le nombre **n** est choisi automatiquement par le calculateur **10** en fonction des paramètres ci-dessus mentionnés et redéfini pour chaque phase transitoire, c'est-à-dire chaque phase durant laquelle le régime moteur évolue rapidement.

Lorsque le moteur **2** fonctionne dans une phase dite stabilisée, c'est-à-dire lorsque les variations du régime moteur sont faibles, le nombre **n** retrouve sa valeur originale programmée par les motoristes.

Le procédé qui vient d'être décrit offre les avantages suivants.

D'abord, le calcul de la correction adaptative est fiabilisé. Le calcul de la correction adaptative est plus précis indépendamment des variations du régime moteur.

Ensuite, le procédé de réglage de l'avance à l'allumage permet de calculer au plus juste la correction adaptative lors des phases transitoires du moteur. Ainsi, la correction apportée à l'allumage est réalisée au plus juste en fonction du régime moteur, notamment dans les phases transitoires du moteur **2**.

Enfin, le procédé du réglage de l'avance à l'allumage est facilement paramétrable. En effet, les motoristes n'ont besoin que de régler le nombre **n** du nombre de cycles à effectuer pour déclencher le calcul de la correction adaptative. Afin de prendre en compte les phases transitoires du moteur, les motoristes intègrent une plage de valeurs s'étendant de part et d'autre du nombre **n** nominal. Ainsi, le paramétrage est simple pour un motoriste et ne requiert pas un espace de données important dans le calculateur **10**

## Revendications

1. Procédé de réglage de l'avance à l'allumage, piloté par un calculateur (**10**), d'un moteur (**2**) à combustion interne comprenant au moins un cylindre (**3**), ce procédé comprenant les opérations consistant, pour le calculateur (**10**), à :

   - enregistrer un nombre de cycles effectués dans le cylindre ainsi que la valeur d'une correction curative de l'avance à l'allumage pour chaque cycle, et
   - calculer une correction adaptative d'avance à l'allumage durant laquelle le calculateur (**10**) procède à une moyenne de la valeur de correction curative en fonction du nombre de cycles écoulés, puis calcule une valeur de correction adaptative à partir de cette moyenne,

   **caractérisé en ce que** le déclenchement de la tâche (**400**) de calcul de la correction adaptative est réalisé lorsqu'un nombre prédéfini de cycles a été atteint, ce nombre de cycles déclenchant la tâche (**400**) de calcul de la correction adaptative étant variable et défini par le calculateur (**10**) en fonction du régime de fonctionnement du moteur (**2**).

2. Procédé selon la revendication 1, **caractérisé en ce qu'**il comprend une tâche (**500**) de comparaison, avec une valeur théorique, d'un résultat obtenu à la tâche (**400**) de calcul de la correction adaptative afin de déterminer si une correction adaptative doit être prise en compte.

3. Calculateur (**10**) **caractérisé en ce qu'**il comprend les moyens d'acquisition, de traitement par instructions logicielles stockées dans une mémoire ainsi que les moyens de commande requis à mise en œuvre du procédé selon l'une quelconque des revendications précédentes.

4. Moteur (**2**) comprenant au moins une bougie (**9**) d'allumage et un calculateur (**10**) selon la revendication précédente.

5. Véhicule (**1**) automobile comprenant un moteur (**2**) selon la revendication précédente.

## Patentansprüche

1. Verfahren zur Einstellung der Zündvorverstellung, das von einem Rechner (**10**) gesteuert wird, einer Brennkraftmaschine (**2**), die mindestens einen Zylinder (**3**) umfasst, wobei dieses Verfahren die Vorgänge umfasst, die darin bestehen, dass der Rechner (**10**):

   - eine Anzahl von Zyklen, die in dem Zylinder ausgeführt wird, sowie den Wert einer behebenden Korrektur der Zündvorverstellung für jeden Zyklus, aufzeichnet, und

- eine adaptive Korrektur der Zündvorverstellung berechnet, während der der Rechner (10) eine Mittelung des behebenden Korrekturwerts in Abhängigkeit von der abgelaufenen Anzahl von Zyklen vornimmt, dann einen adaptiven Korrekturwert ausgehend von diesem Mittel berechnet,

**dadurch gekennzeichnet, dass** das Auslösen der Rechenaufgabe (400) der adaptiven Korrektur ausgeführt wird, wenn eine vordefinierte Anzahl von Zyklen erreicht wurde, wobei diese Anzahl von Zyklen, die die Rechenaufgabe (400) der adaptiven Korrektur ausführt, variabel ist und von dem Rechner (10) in Abhängigkeit von der Betriebsdrehzahl des Motors (2) definiert wird.

2.  Verfahren nach Anspruch 1, **dadurch gekennzeichnet, dass** es eine Vergleichsaufgabe (500) mit einem theoretischen Wert eines Resultats umfasst, das bei der Rechenaufgabe (400) der adaptiven Korrektur erhalten wird, um zu bestimmen, ob eine adaptive Korrektur berücksichtigt werden muss.

3.  Rechner (10), **dadurch gekennzeichnet, dass** er Mittel zum Aufzeichnen, zur Verarbeitung durch Softwareanweisungen, die in einem Speicher gespeichert sind, sowie Steuermittel umfasst, die zur Umsetzung des Verfahrens nach einem der vorstehenden Ansprüche erforderlich sind.

4.  Maschine (2), die mindestens eine Zündkerze (9) und einen Rechner (10) nach dem vorstehenden Anspruch umfasst.

5.  Kraftfahrzeug (1), das eine Maschine (2) nach dem vorstehenden Anspruch umfasst.


**Claims**

1.  A method for adjusting the ignition advance, controlled by a computer (10), of an internal combustion engine (2) including at least one cylinder (3), this method including the operations consisting, for the computer (10), in:

    - recording a number of cycles performed in the cylinder and the value of an ignition advance curative correction for each cycle, and
    - calculating an ignition advance adaptive correction during which the computer (10) averages the curative correction value as a function of the number of cycles elapsed, then calculates an adaptive correction value on the basis of this average,

    **characterized in that** the triggering of the task (400) of calculating the adaptive correction is realised when a predefined number of cycles has been reached, this number of cycles triggering the task (400) of calculating the adaptive correction being variable and defined by the computer (10) as a function of the operating speed of the engine (2).

2.  The method according to Claim 1, **characterized in that** it includes a task (500) of comparison, with a theoretical value, of a result obtained at the task (400) of calculating the adaptive correction so as to determine if an adaptive correction is to be taken into account.

3.  A computer (10), **characterized in that** it includes the means for acquisition, for processing by software instructions stored in a memory and also the control means required for implementing the method according to any one of the preceding claims.

4.  An engine (2) including at least one spark plug (9) and a computer (10) according to the preceding claim.

5.  A motor vehicle (1) including an engine (2) according to the preceding claim.

FIG. 1

FIG. 2

FIG. 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2987404